# NEUE EUROPÄISCHE PATENTSCHRIFT

(11) **EP 3 212 486 B2**
(45) Veröffentlichungstag und Bekanntmachung des Hinweises auf die Entscheidung über den Einspruch: **11.09.2024**
(45) Hinweis auf die Patenterteilung: 24.04.2019
(21) Anmeldenummer: 15775660.2
(22) Anmeldetag: 29.09.2015
(51) Int. Cl.: B62D 15/02, G08G 1/14, B60W 30/06, G01C 21/36, G05D 1/02, G08G 1/09, G08G 1/0967, G08G 1/0962, G08G 1/0968, G08G 1/16

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF PERMETTANT DE FAIRE FONCTIONNER UN VÉHICULE

(30) Priorität: 27.10.2014 DE 102014221777
(43) Veröffentlichungstag der Anmeldung: 06.09.2017
(73) Patentinhaber: Robert Bosch GmbH, 70442 Stuttgart (DE)
(72) Erfinder: MATHONY, Hans-Joerg, 71732 Tamm-Hohenstange (DE); MIELENZ, Holger, 73760 Ostfildern (DE); NORDBRUCH, Stefan, 70806 Kornwestheim (DE); HOFFMANN, Stefan, 74321 Bietigheim (DE); NICODEMUS, Rolf, 74321 Bietigheim-Bissingen (DE); IRION, Albrecht, 70563 Stuttgart (DE)
(86) Internationale Anmeldenummer: PCT/EP2015/072330
(87) Internationale Veröffentlichungsnummer: WO 2016/066353

(56) Entgegenhaltungen:
- WO-A1-2016/083028
- DE-A1- 102004 032 346
- DE-A1- 102009 029 117
- DE-A1- 102009 046 912
- US-A1- 2002 171 562
- US-A1- 2010 156 672
- US-A1- 2012 188 100

## Beschreibung

Die Erfindung betrifft ein Verfahren und eine Vorrichtung zum Betreiben eines Fahrzeugs. Die Erfindung betrifft ferner ein Fahrzeug, sowie ein Computerprogramm.

### Stand der Technik

Die Offenlegungsschrift DE 10 2009 046 912 A1 ist als nächstliegender Stand der Technik nach dem Oberbegriff der Ansprüche 1, 6, 8 zu sehen und zeigt ein Verfahren und eine Einrichtung für die Fahrzeugführung.

Die Offenlegungsschrift US 2012/188100 A1 zeigt eine Vorrichtung und ein Verfahren zum Durchführen eines automatischen Parkvorgangs.

Die Offenlegungsschrift DE 10 2009 029 117 A1 zeigt ein Verfahren zum Unterstützen eines Fahrbetriebs eines Kraftfahrzeugs sowie eine Fahrerassistenzvorrichtung.

Die Offenlegungsschrift US 2010/156672 A1 zeigt ein System und ein Verfahren zum Durchführen eines automatischen Parkvorgangs.

Die Offenlegungsschrift DE 10 2004 032 346 A1 zeigt ein Verfahren zum Lotsen von Fahrzeugen sowie ein Fahrzeugleitsystem.

Die Offenlegungsschrift US 2002/171562 A1 zeigt ein Leitsystem für einen Parkplatz.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Bekannte Navigationssysteme umfassen in der Regel keine digitalen Karten von Parkplätzen, so dass eine autonome Fahrzeugnavigation innerhalb eines Parkplatzes erschwert oder nicht möglich ist.

Die Offenlegungsschrift JP 002007233771 A offenbart einen Parkroboter als Lotse, der ein Fahrzeug zu einem Parkplatz hinlotst. Das Fahrzeug folgt dem Parkrobert selbständig.

### Offenbarung der Erfindung

Die der Erfindung zugrundeliegende Aufgabe kann darin gesehen werden, ein Verfahren zum Betreiben eines Fahrzeugs bereitzustellen, welches eine autonome Navigation des Fahrzeugs innerhalb eines Parkplatzes ermöglicht.

Die der Erfindung zugrundeliegende Aufgabe kann auch darin gesehen werden, eine entsprechende Vorrichtung zum Betreiben eines Fahrzeugs anzugeben.

Die der Erfindung zugrundeliegende Aufgabe kann des Weiteren darin gesehen werden, ein entsprechendes Fahrzeug bereitzustellen.

Die der Erfindung zugrundeliegende Aufgabe kann darüber hinaus darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Fahrzeugs, bereitgestellt,
- wobei eine digitale Karte eines Parkplatzes und zumindest eine Zielposition auf dem Parkplatz vom Fahrzeug über ein Kommunikationsnetzwerk empfangen wird,
- wobei das Fahrzeug autonom auf dem Parkplatz basierend auf der digitalen Karte zu der Zielposition navigiert und
- wobei sich das Fahrzeug autonom an der Zielposition abstellt.

Nach noch einem Aspekt wird eine Vorrichtung zum Betreiben eines Fahrzeugs, bereitgestellt, umfassend:
- eine Kommunikationsschnittstelle, die ausgebildet ist, eine digitale Karte eines Parkplatzes und eine Zielposition auf dem Parkplatz über ein Kommunikationsnetzwerk zu empfangen, und
- eine Führungseinrichtung, die ausgebildet ist, das Fahrzeug autonom auf dem Parkplatz basierend auf der digitalen Karte zu der Zielposition zu führen und das Fahrzeug autonom an der Zielposition abzustellen.

Gemäß einem weiteren Aspekt wird ein Fahrzeug bereitgestellt, welches eingerichtet ist, das erfindungsgemäße Verfahren durchzuführen.

Es wird ein Server bereitgestellt, umfassend:
- eine Datenbank, in welcher eine digitale Karte eines Parkplatzes gespeichert ist,
- einen Prozessor, der ausgebildet ist, zumindest eine Zielposition auf dem Parkplatz zu ermitteln, und
- eine Kommunikationsschnittstelle, die ausgebildet ist, die digitale Karte und die Zielposition über ein Kommunikationsnetzwerk an ein Fahrzeug zu senden.

Nach noch einem Aspekt wird ein Computerprogramm bereitgestellt, welches Programmcodes zur Durchführung des erfindungsgemäßen Verfahrens umfasst, wenn das Computerprogramm auf einem Computer ausgeführt wird.

Die Erfindung umfasst also insbesondere den Gedanken, dem Fahrzeug eine digitale Karte des Parkplatzes über ein Kommunikationsnetzwerk zu übermitteln. Des Weiteren wird dem Fahrzeug zumindest eine Zielposition auf dem Parkplatz über das Kommunikationsnetzwerk übermittelt. Dadurch wird also in vorteilhafter Weise das Fahrzeug in die Lage versetzt, autonom auf dem Parkplatz zu der Zielposition zu navigieren. Es ist also in vorteilhafter Weise eine autonome Navigation des Fahrzeugs auf einem Parkplatz ermöglicht.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Fahrzeug selbstständig, also ohne einen Eingriff eines Fahrers, navigiert. Das Fahrzeug fährt also selbstständig auf dem Parkplatz, ohne dass ein Fahrer hierfür das Fahrzeug steuern müsste. Das heißt also insbesondere, dass die Führungseinrichtung für die Navigation das Fahrzeug autonom führt. Ein Führen umfasst insbesondere eine Quer- und/oder eine Längsführung des Fahrzeugs. Beim autonomen Fahren oder Navigieren muss der Fahrer also selbst nicht im Fahrzeug sein.

Erfindungsgemäß ist vorgesehen, dass die zumindest eine Zielposition eine Abgabeposition, an welcher ein Fahrer des Fahrzeugs sein Fahrzeug für einen autonomen Parkvorgang abstellen kann, und eine Parkposition umfasst, an welcher das Fahrzeug autonom parken soll.

Dadurch wird insbesondere der technische Vorteil bewirkt, dass ein autonomer Parkvorgang (Valet Parking) auf dem Parkplatz durchgeführt werden kann. Das heißt also insbesondere, dass das Fahrzeug in vorteilhafter Weise selbstständig, also autonom, von der Abgabeposition zu der Parkposition fährt und wieder zurück.

Nach einer Ausführungsform werden mehrere Zielpositionen vom Fahrzeug über das Kommunikationsnetzwerk empfangen. Das Fahrzeug wählt aus den empfangenen Zielpositionen diejenige aus, zu der es hinnavigiert.

Nach einer Ausführungsform ist vorgesehen, dass das Fahrzeug über das Kommunikationsnetzwerk mindestens eine Zielposition, insbesondere mehrere, empfängt, wobei das Fahrzeug die Zielposition oder die Zielpositionen abhängig von jeweiligen der oder den Zielpositionen zugeordneten Prioritäten abfährt. Das heißt, dass die Zielpositionen jeweils eine Priorität aufweisen, insbesondere unterschiedliche Prioritäten, wobei die Prioriäten eine Reihenfolge vorgeben, in welcher das Fahrzeug die Zielpositionen abfahren soll, wobei insbesondere vorgesehen ist, dass das Fahrzeug die Zielpositionen entsprechend der Reihenfolge abfährt.

In einer anderen Ausführungsform ist vorgesehen, dass eine innerhalb des Parkplatzes liegende Route zu der Zielposition basierend auf der digitalen Karte ermittelt wird, wobei das Navigieren ein Abfahren der Route umfasst.

Dadurch wird insbesondere der technische Vorteil bewirkt, dass das Navigieren besonders effizient durchgeführt werden kann, insofern die abzufahrende Route bereits feststeht. Das Fahrzeug muss diese also nur noch abfahren, um zu der Zielposition zu gelangen. Dies beschleunigt in vorteilhafter Weise eine Navigation des Fahrzeugs auf dem Parkplatz. Insbesondere ist es so in vorteilhafter Weise ermöglicht, dass das Fahrzeug schneller zu seiner Zielposition gelangen kann.

In einer anderen Ausführungsform ist vorgesehen, dass die Route fahrzeugextern ermittelt und an das Fahrzeug über das Kommunikationsnetzwerk übermittelt wird oder dass die Route fahrzeugintern ermittelt wird.

Das fahrzeugexterne Ermitteln kann beispielsweise nach einer Ausführungsform mittels des Servers, genauer mittels seines Prozessors, durchgeführt werden. Zum Durchführen der fahrzeuginternen Ermittlung der Route umfasst nach einer Ausführungsform die Führungseinrichtung einen Prozessor, der entsprechend ausgebildet ist, die Route zu ermitteln. Bei einer fahrzeugexternen Ermittlung ist insbesondere der technische Vorteil gegeben, dass das Fahrzeug hierfür selbst keine Ressourcen reservieren muss. In der Regel weiß auch ein externes System, hier beispielsweise der Server, besser über einen Verkehr auf dem Parkplatz Bescheid als das Fahrzeug selbst. So kann der Server in vorteilhafter Weise eine Route berechnen, die möglichst zügig und effizient durch den bereits vorhandenen Verkehr führt, so dass ein stockender Verkehr oder ein Stau vermieden werden können. Eine fahrzeuginterne Ermittlung der Route weist insbesondere den technischen Vorteil auf, dass hierfür keine Verbindung zum Server über das Kommunikationsnetzwerk bestehen muss. So kann also die Route ermittelt werden, auch wenn keine Verbindung über das Kommunikationsnetzwerk zum Server besteht. Das Fahrzeug ist also hinsichtlich des Ermittelns der Route unabhängig von einem externen System, hier beispielsweise dem Server.

In einer Ausführungsform wird sowohl fahrzeugextern als auch fahrzeugintern eine Route zur Zielposition ermittelt, wobei die fahrzeugextern ermittelte Route dann an das Fahrzeug über das Kommunikationsnetzwerk übertragen wird. Das Fahrzeug vergleicht die beiden Routen und entscheidet, welche es abfahren wird.

Eine Route im Sinne der vorliegenden Erfindung umfasst eine Startposition und die Zielposition. Vorzugsweise navigiert das Fahrzeug zur der Startposition und fährt von dort aus die Route zur Zielposition ab. Insbesondere entspricht die Startposition der Abgabeposition, an welcher ein Fahrer sein Fahrzeug abstellen und verlassen kann, damit das Fahrzeug anschließend autonom zur Parkposition fahren soll.

Es ist vorgesehen, dass das Fahrzeug autonom von der Abgabeposition zu der Parkposition navigiert.

Es ist außerdem vorgesehen, dass das Fahrzeug autonom in die Parkposition einparkt.

Es ist außerdem vorgesehen, dass das Fahrzeug autonom aus der Parkposition ausparkt.

Es ist außerdem vorgesehen, dass das Fahrzeug autonom von der Parkposition zu der Abgabeposition navigiert.

In anderen Ausführungsform ist vorgesehen, dass das Fahrzeug während der Navigation zumindest eine vom Parkplatz umfasste Landmarke sensorisch erfasst, wobei eine momentane Position des Fahrzeugs in der digitalen Karte basierend auf der erfassten Landmarke ermittelt wird, wobei das Navigieren zusätzlich basierend auf der ermittelten momentanen Position durchgeführt wird.

Das heißt also insbesondere, dass der Parkplatz eine Landmarke umfasst, an welcher sich das Fahrzeug bei der Navigation orientiert. Dadurch wird insbesondere der technische Vorteil bewirkt, dass eine Navigation noch effizienter durchgeführt werden kann. Insbesondere kann so in vorteilhafter Weise eine ermittelte Route auf Korrektheit überprüft werden. Vorzugsweise sind mehrere Landmarken vorgesehen. Eine Landmarke ist beispielsweise eine visuelle Landmarke, zum Beispiel ein Barcode. Eine Landmarke ist beispielsweise ein RFID-Sensor.

In einer anderen Ausführungsform ist vorgesehen, dass das Fahrzeug während der Navigation sein Umfeld sensorisch erfasst, wobei das Navigieren zusätzlich basierend auf dem erfassten Umfeld durchgeführt wird.

Dadurch wird insbesondere der technische Vorteil bewirkt, dass eine Navigation des Fahrzeugs auf dem Parkplatz besonders effizient durchgeführt werden kann. Insbesondere kann das Fahrzeug in vorteilhafter Weise Hindernisse erkennen, so dass es um diese Hindernisse herum fahren kann.

Für das sensorische Erfassen ist eine Umfeldsensorik vorgesehen. Eine Umfeldsensorik umfasst beispielsweise einen oder mehrere Umfeldsensoren wie zum Beispiel: Ultraschallsensor, Lidarsensor, Lasersensor, Videosensor oder Radarsensor.

Mittels einer solchen Umfeldsensorik erfasst ein Fahrzeug sein Umfeld, wobei die Navigation insbesondere basierend auf dem erfassten Umfeld durchgeführt wird. So kann also das Fahrzeug beispielsweise Hindernisse erkennen und um diese herumfahren. So kann also beispielsweise das Fahrzeug mittels der Umfeldsensorik erkennen, wo es sich in Bezug auf die digitale Karte auf dem Parkplatz befindet. Für dieses Erkennen werden vorzugsweise eine oder mehrere erfasste Landmarken verwendet.

In einer Ausführungsform umfasst der Parkplatz ein WLAN, basierend auf welchem das Fahrzeug die Navigation, insbesondere eine Lokalisierung, wo sich das Fahrzeug relativ zur digitalen Karte befindet, durchführt.

Nach einer Ausführungsform umfasst das Kommunikationsnetzwerk ein Mobilfunknetzwerk und/oder ein WLAN-Netzwerk.

Gemäß einer weiteren Ausführungsform ist vorgesehen, dass der Prozessor des Servers ausgebildet ist, eine innerhalb des Parkplatzes liegende Route zu der Zielposition basierend auf der digitalen Karte zu ermitteln, wobei die Kommunikationsschnittstelle ausgebildet ist, die ermittelte Route über das Kommunikationsnetzwerk an das Fahrzeug zu senden.

Die Kommunikation über das Kommunikationsnetzwerk, insbesondere zwischen dem Fahrzeug und dem Server, ist vorzugsweise verschlüsselt.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs,
- Fig. 2: eine Vorrichtung zum Betreiben eines Fahrzeugs,
- Fig. 3: ein Fahrzeug und
- Fig. 4: einen Server.

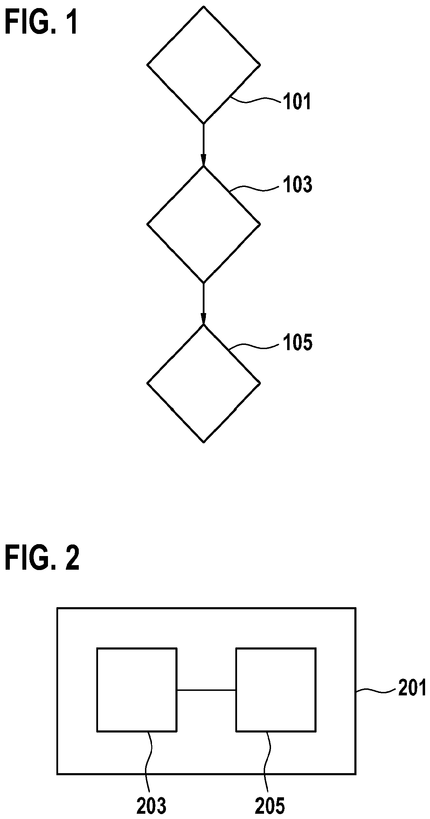

Fig.1 zeigt ein Ablaufdiagramm eines Verfahrens zum Betreiben eines Fahrzeugs.

Gemäß einem Schritt 101 werden eine digitale Karte eines Parkplatzes und zumindest eine Zielposition auf dem Parkplatz vom Fahrzeug über ein Kommunikationsnetzwerk empfangen. Die digitale Karte und die zumindest eine Zielposition können beispielsweise mittels eines Servers über das Kommunikationsnetzwerk an das Fahrzeug gesendet werden. In einem Schritt 103 navigiert das Fahrzeug autonom, also selbstständig, auf dem Parkplatz basierend auf der digitalen Karte zu der Zielposition. In einem Schritt 105 stellt sich das Fahrzeug autonom an der Zielposition ab. Das heißt also, dass, wenn das Fahrzeug die Zielposition erreicht hat, sich das Fahrzeug autonom an der Zielposition abstellt.

Die Zielposition umfasst eine Abgabeposition und eine Parkposition. Das heißt also, dass das Fahrzeug selbstständig von der Abgabeposition zu der Parkposition fährt und dort parkt. Das heißt also, dass das Fahrzeug selbstständig, also autonom, von der Parkposition zur Abgabeposition zurückfährt. Das heißt also insbesondere, dass ein Fahrer das Fahrzeug an der Abgabeposition abstellen kann. Anschließend fährt das Fahrzeug autonom zu der Parkposition und parkt dort selbstständig. Zu einem
späteren Zeitpunkt fährt das Fahrzeug dann selbstständig, also autonom, von der Parkposition zurück zu der Abgabeposition, so dass der Fahrer wieder in sein Fahrzeug einsteigen kann und es so an der Abgabeposition abholen kann.

Fig. 2 zeigt eine Vorrichtung 201 zum Betreiben eines Fahrzeugs.

Die Vorrichtung 201 umfasst eine Kommunikationsschnittstelle 203, die ausgebildet ist, eine digitale Karte eines Parkplatzes und eine Zielposition auf dem Parkplatz über ein Kommunikationsnetzwerk zu empfangen. Die Vorrichtung 201 umfasst eine Führungseinrichtung 205, die ausgebildet ist, das Fahrzeug autonom auf dem Parkplatz basierend auf der digitalen Karte zu der Zielposition zu führen und das Fahrzeug autonom an der Zielposition abzustellen.

Nach einer Ausführungsform umfasst das Kommunikationsnetzwerk ein Mobilfunknetzwerk und/oder ein WLAN-Netzwerk.

Nach einer Ausführungsform umfasst die Führung zwecks Navigation seitens der Führungseinrichtung eine Längs- und/oder Querführung des Fahrzeugs. Das heißt also insbesondere, dass die Führungseinrichtung eine Längs- und/oder Querführung des Fahrzeugs steuert oder regelt.

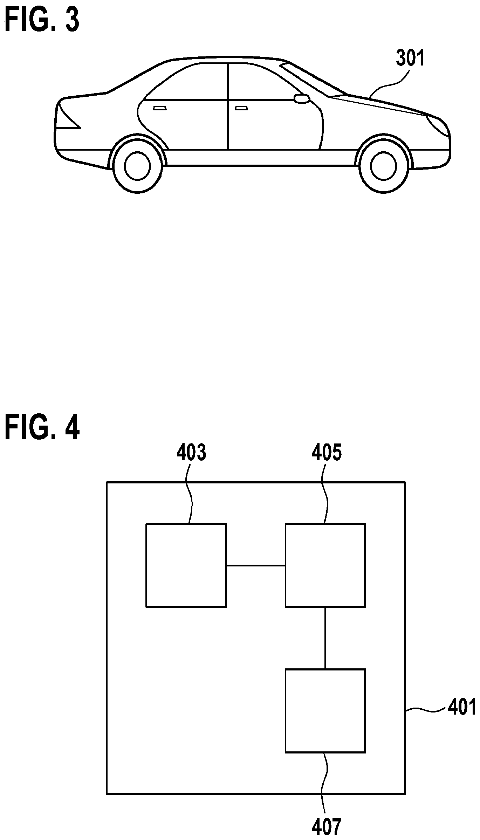

Fig. 3 zeigt ein Fahrzeug 301, welches eingerichtet ist, das erfindungsgemäße Verfahren durchzuführen. Das heißt also insbesondere, dass das Fahrzeug 301 eingerichtet ist, autonom von einer Abgabeposition hin zur Parkposition zu navigieren und wieder zurück. Dies basierend auf der digitalen Karte und der Zielposition. Beispielsweise umfasst das Fahrzeug 301 die Vorrichtung 201 der Fig. 2. Das Fahrzeug 301 umfasst insbesondere eine Umfeldsensorik für eine sensorische Erfassung des Fahrzeugumfelds.

Fig. 4 zeigt einen Server 401.

Der Server 401 umfasst eine Datenbank 403, in welcher eine digitale Karte eines Parkplatzes gespeichert ist. Der Server 401 umfasst ferner einen Prozessor 405, der ausgebildet ist, zumindest eine Zielposition auf dem Parkplatz zu ermitteln. Der Server 401 umfasst ferner eine Kommunikationsschnittstelle 407, die ausgebildet ist, die digitale Karte und die Zielposition über ein Kommunikationsnetzwerk an ein Fahrzeug zu senden.

In einer Ausführungsform ist der Prozessor 405 des Servers 401 ausgebildet, eine innerhalb eines Parkplatzes liegende Route zu der Zielposition basierend auf der digitalen Karte zu ermitteln, wobei die Kommunikationsschnittstelle 407 ausgebildet ist, die ermittelte Route über das Kommunikationsnetzwerk an das Fahrzeug zu senden.

Die Erfindung umfasst also insbesondere den Gedanken, dass das Fahrzeug auf Basis von übermittelten und/oder bereitgestellten Informationen (hier die digitale Karte und die zumindest eine Zielposition) sowie insbesondere eigener Sensorik wie zum Beispiel einer Umfeldsensorik (zum Beispiel Videokamera, Lasersensor, Ultraschallsensor, Lidarsensor oder Radarsensor) die Zielposition, also zum Beispiel die Parkposition oder die Parkbucht, selbstständig, also autonom, anfährt. Das heißt also, dass die notwendigen Informationen eine digitale Karte des Parkplatzes, insbesondere des Parkhauses, umfassen. Die digitale Karte ist beispielsweise eine hochgenaue digitale Karte des Parkhauses/Parkplatzes. Insbesondere umfassen die notwendigen Informationen eine oder mehrere Zielpositionen. Diese Informationen werden also dem Fahrzeug über das Kommunikationsnetzwerk übermittelt.

Vorzugsweise existiert im Parkhaus oder in dem Parkplatz zur Ergänzung einer Infrastruktur als Basis eine Lokalisierung, wie zum Beispiel Landmarken, zum Beispiel visuelle Landmarken wie zum Beispiel Barcodes und/oder RFID-Sensoren. Insbesondere umfasst der Parkplatz, insbesondere das Parkhaus, als Infrastruktur ein WLAN. Das heißt also insbesondere, dass eine Lokalisierung des Fahrzeugs basierend auf einer WLAN Messung durchgeführt werden kann.

Nicht gezeigte Ausführungsformen umfassen ein oder mehrere der folgenden beispielhaften Merkmale:
- Das Fahrzeug wird auf der Abgabestelle oder Abgabeposition (auch Dropping Zone genannt) abgestellt.
- Ein Parkplatzmanagement übermittelt dem Fahrzeug hochgenaue Parkhauskarte / Parkplatzkarte (digitale Karte) (beispielsweise auch schon im Vorfeld, also vor dem Abstellen des Fahrzeugs auf der Abgabestelle).
- Das Parkplatzmanagement übermittelt dem Fahrzeug eine reservierte Zielposition für das Parken (beispielsweise auch schon im Vorfeld, also vor dem Abstellen des Fahrzeugs auf der Abgabestelle).
- Das Fahrzeug berechnet oder ermittelt sich einen Fahrweg (Route) zum Zielparkplatz (Zielposition) und/oder das Parkplatzmanagement berechnet oder ermittelt den Fahrweg zum Zielparkplatz und übermittelt diesen an das Fahrzeug.
- Das Fahrzeug fährt den Weg (Route) zur Zielposition ab.
- Auf dem Weg (während der Navigation) lokalisiert sich das Fahrzeug über
   - die digitale Karte vorzugsweise
      in Verbindung mit
   - beispielsweise Landmarken (siehe oben), die durch eigene Sensorik (Umfeldsensorik des Fahrzeugs) detektiert werden und ausgewertet werden und/oder
   - vorzugsweise WLAN und/oder
   - vorzugsweise bordeigenen Sensoren (Video, Radar, Lidar usw.).
- Auf dem Weg werden durch die bordeigenen Sensoren, insbesondere der Umfeldsensorik, eventuelle Hindernisse detektiert und bei Bedarf umfahren oder vor diesen gestoppt.
- Das Fahrzeug parkt in die Parkposition ein, zum Beispiel mittels eines Einparkassistenten.
- Der Rückweg vom Parkplatz zur Abgabestelle wird analog durchgeführt.

In einer Ausführungsform umfasst das Parkhaus / der Parkplatz für das voll automatische oder autonome Valet Parking einen eigenen reservierten Bereich. Dadurch würden mögliche Probleme durch einen Mischverkehr bzw. durch Fußgänger usw. umgangen.

In einer ersten Ausbaustufe (also in einer Ausführungsform) kann das Parkhaus / der Parkplatz für das voll automatische Valet Parking einen eigenen Bereich reservieren. Dadurch würden mögliche Probleme durch einen Mischverkehr bzw. durch Fußgänger usw. umgangen.

Das Parkraummanagement überwacht in einer anderen Ausführungsform die ganze Zeit die Fahrt des Fahrzeuges mit Hilfe einer Parkraumüberwachung (zum Beispiel über Videokameras). Bei Problemen kann nach einer Ausführungsform das Parkraummanagement die Fahrt durch ein "Stopp-Signal" unterbrechen.

Die Übergabe der Informationen wird nach einer Ausführungsform mit C2X Systemen (zum Beispiel über WLAN) durchgeführt, vorzugsweise verschlüsselt.

## Patentansprüche

1. Verfahren zum Betreiben eines Fahrzeugs (301),
- wobei eine digitale Karte eines Parkplatzes und zumindest eine Zielposition auf dem Parkplatz vom Fahrzeug (301) über ein Kommunikationsnetzwerk empfangen (101) wird,
- wobei das Fahrzeug (301) autonom auf dem Parkplatz basierend auf der digitalen Karte zu der Zielposition navigiert (103) und
- wobei sich das Fahrzeug autonom an der Zielposition abstellt (105), **dadurch gekennzeichnet, dass**
- die zumindest eine Zielposition eine Abgabeposition, an welcher ein Fahrer des Fahrzeugs (301) sein Fahrzeug (301) für einen autonomen Parkvorgang abstellen kann, und eine Parkposition umfasst, an welcher das Fahrzeug (301) autonom parken soll, so dass das Fahrzeug (301) autonom von der Abgabeposition zu der Parkposition fährt und wieder zurück.

2. Verfahren nach Anspruch 1, wobei eine innerhalb des Parkplatzes liegende Route zu der Zielposition basierend auf der digitalen Karte ermittelt wird, wobei das Navigieren ein Abfahren der Route umfasst.

3. Verfahren nach Anspruch 2, wobei die Route fahrzeugextern ermittelt und an das Fahrzeug (301) über das Kommunikationsnetzwerk übermittelt wird oder wobei die Route fahrzeugintern ermittelt wird.

4. Verfahren nach einem der vorherigen Ansprüche, wobei das Fahrzeug (301) während der Navigation zumindest eine vom Parkplatz umfasste Landmarke sensorisch erfasst, wobei eine momentane Position des Fahrzeugs in der digitalen Karte basierend auf der erfassten Landmarke ermittelt wird, wobei das Navigieren zusätzlich basierend auf der ermittelten momentanen Position durchgeführt wird.

5. Verfahren nach einem der vorherigen Ansprüche, wobei das Fahrzeug (301) während der Navigation sein Umfeld sensorisch erfasst, wobei das Navigieren zusätzlich basierend auf dem erfassten Umfeld durchgeführt wird.

6. Vorrichtung (201) zum Betreiben eines Fahrzeugs (301), umfassend:
- eine Kommunikationsschnittstelle (203), die ausgebildet ist, eine digitale Karte eines Parkplatzes und eine Zielposition auf dem Parkplatz über ein Kommunikationsnetzwerk zu empfangen, und
- eine Führungseinrichtung (205), die ausgebildet ist, das Fahrzeug (301) autonom auf dem Parkplatz basierend auf der digitalen Karte zu der Zielposition zu führen und das Fahrzeug autonom an der Zielposition abzustellen,
**dadurch gekennzeichnet, dass**
- die zumindest eine Zielposition eine Abgabeposition, an welcher ein Fahrer des Fahrzeugs (301) sein Fahrzeug (301) für einen autonomen Parkvorgang abstellen kann, und eine Parkposition umfasst, an welcher das Fahrzeug (301) autonom parken soll, so dass das Fahrzeug (301) autonom von der Abgabeposition zu der Parkposition fahren kann und wieder zurück.

7. Fahrzeug (301), welches eingerichtet ist, das Verfahren nach einem der Ansprüche 1 bis 5 durchzuführen.

8. Computerprogramm, umfassend Programcode zur Durchführung des Verfahrens nach einem der Ansprüche 1 bis 5, wenn das Computerprogramm auf einem Computer ausgeführt wird.

## Claims

1. Method for operating a vehicle (301),
- wherein a digital map of a carpark and at least one target position on the carpark are received (101) by the vehicle (301) via a communication network,
- wherein the vehicle (301) navigates (103) autonomously to the target position on the carpark on the basis of the digital map, and
- wherein the vehicle parks (105) autonomously at the target position, **characterized in that**
- the at least one target position comprises a handover position at which a driver of the vehicle (301) can park his vehicle (301) for an autonomous parking process, and a parking position at which the vehicle (301) is to park autonomously, with the result that the vehicle (301) drives autonomously from the handover position to the parking position and back again.

2. Method according to Claim 1, wherein a route within the carpark, to the target position, is determined on the basis of the digital map, wherein the navigation comprises travelling along the route.

3. Method according to Claim 2, wherein the route is determined externally to the vehicle and is transmitted to the vehicle (301) via the communication network, or wherein the route is determined internally in the vehicle.

4. Method according to one of the preceding claims, wherein, during the navigation, the vehicle (301) detects by sensor at least one landmark which is included in the carpark, wherein an instantaneous position of the vehicle on the digital map is determined on the basis of the sensed landmark, wherein the navigation is additionally carried out on the basis of the determined instantaneous position.

5. Method according to one of the preceding claims, wherein, during the navigation, the vehicle (301) detects its surroundings by sensor, wherein the navigation is additionally carried out on the basis of the detected surroundings.

6. Device (201) for operating a vehicle (301), comprising:
- a communication interface (203) which is designed to receive a digital map of a carpark and a target position on the carpark via a communication network, and
- a guide apparatus (205) which is designed to guide the vehicle (301) autonomously to the target position on the carpark on the basis of the digital map and to park the vehicle autonomously at the target position, **characterized in that**
- the at least one target position comprises a handover position at which a driver of the vehicle (301) can park his vehicle (301) for an autonomous parking process, and a parking position at which the vehicle (301) is to be parked autonomously, with the result that the vehicle (301) can autonomously drive from the handover position to the parking position and back again.

7. Vehicle (301) which is configured to carry out the method according to one of Claims 1 to 5.

8. Computer program comprising program code for carrying out the method according to one of Claims 1 to 5 when the computer program is executed on a computer.

## Revendications

1. Procédé pour faire fonctionner un véhicule (301),
- dans lequel une carte numérique d'une place de stationnement, et au moins une position cible sur la place de stationnement, est réceptionnée par le véhicule (301) via un réseau de communication (101),
- dans lequel le véhicule (301) navigue de manière autonome sur la place de stationnement vers la position cible (103) sur la base de la carte numérique et
- dans lequel le véhicule se gare de manière autonome à la position cible (105),
**caractérisé en ce que**
- l'au moins une position cible comprend une position de remise à laquelle un conducteur du véhicule (301) peut garer son véhicule (301) pour un processus de parcage autonome, et une position de parcage à laquelle le véhicule (301) doit se parquer de manière autonome, de sorte que le véhicule (301) roule de manière autonome de la position de remise vers la position de parcage et inversement.

2. Procédé selon la revendication 1, dans lequel un itinéraire vers la position cible situé à l'intérieur de la place de stationnement est déterminé sur la base de la carte numérique, dans lequel la navigation comprend le fait de parcourir l'itinéraire.

3. Procédé selon la revendication 2, dans lequel l'itinéraire est déterminé de manière externe au véhicule et est transmis au véhicule (301) via le réseau de communication ou dans lequel l'itinéraire est déterminé de manière interne au véhicule.

4. Procédé selon l'une des revendications précédentes, dans lequel, pendant la navigation, le véhicule (301) détecte par capteur au moins un point de repère compris par la place de stationnement, dans lequel une position momentanée du véhicule est déterminée sur la carte numérique sur la base du point de repère détecté, dans lequel la navigation est additionnellement réalisée sur la base de la position momentanée déterminée.

5. Procédé selon l'une des revendications précédentes, dans lequel, pendant la navigation, le véhicule (301) détecte par capteur son environnement, dans lequel la navigation est additionnellement réalisée sur la base de l'environnement détecté.

6. Dispositif (201) pour faire fonctionner un véhicule (301), comprenant :
- une interface de communication (203), laquelle est réalisée pour réceptionner une carte numérique d'une place de stationnement et une position cible sur la place de stationnement via un réseau de communication, et
- un dispositif de guidage (205) réalisé pour guider le véhicule (301) de manière autonome sur la place de stationnement, sur la base de la carte numérique, vers la position cible, et garer le véhicule de manière autonome à la position cible,
**caractérisé en ce que**
- l'au moins une position cible comprend une position de remise à laquelle un conducteur du véhicule (301) peut garer son véhicule (301) pour un processus de parcage autonome, et une position de parcage à laquelle le véhicule (301) doit se parquer de manière autonome, de sorte que le véhicule (301) peut rouler de manière autonome de la position de remise vers la position de parcage et inversement.

7. Véhicule (301), lequel est étudié pour mettre en oeuvre le procédé selon l'une des revendications 1 à 5.

8. Programme informatique, comprenant un code de programme pour la mise en oeuvre du procédé selon l'une des revendications 1 à 5 lorsque le programme informatique est exécuté sur un ordinateur.
